# EUROPEAN PATENT SPECIFICATION

(11) **EP 4 639 799 B1**
(45) Date of publication and mention of the grant of the patent: **08.04.2026**
(21) Application number: 24768296.6
(22) Date of filing: 06.09.2024
(51) Int. Cl.: H04B 7/185, H04W 84/06

(54) **PROVISIONING SERVICE VIA A NON-TERRESTRIAL RADIO ACCESS NETWORK**
BEREITSTELLUNG EINES DIENSTES ÜBER EIN NICHT TERRESTRISCHES FUNKZUGANGSNETZWERK
FOURNITURE DE SERVICE PAR L'INTERMÉDIAIRE D'UN RÉSEAU D'ACCÈS RADIO NON TERRESTRE

(30) Priority: 08.09.2023 IT 202300018510
(43) Date of publication of application: 29.10.2025
(73) Proprietor: Vodafone Group Services Limited, Newbury RG14 2FN (GB)
(72) Inventor: JAVIER DOMINGUEZ, Francisco, London Greater London W2 6BY (GB); MARINO, Victor, London Greater London W2 6BY (GB); PEDRUELO, Jesus, London Greater London W2 6BY (GB); ENRIQUE LOAIZA, Gustavo, London Greater London W2 6BY (GB); SCALONE, Gianpaolo Angelo, London Greater London W2 6BY (GB)
(74) Representative: Boult Wade Tennant LLP
(86) International application number: PCT/EP2024/075024
(87) International publication number: WO 2025/051977

(56) References cited:
- US-A1- 2022 369 266
- US-A1- 2023 115 431

## Description

### Technical Field of the Disclosure

The present disclosure is concerned with provisioning service to a user terminal registering on a cellular network via a non-terrestrial Radio Access Network (RAN). A network entity of a cellular network for such provisioning is also considered.

### Background to the Disclosure

Cellular wireless communication networks provide wide geographical coverage by allowing user (mobile) terminals or User Equipment (UE) to access the network through a Radio Access Network (RAN) formed of cells, each cell having a specific geographical coverage area. In this context, a cell refers to a base station (RAN access node) having a cell identifier (Cell ID), for example as used in Third Generation Partnership Project (3GPP) standards. Coverage areas of cells may overlap and this may assist to avoid areas without coverage. Nevertheless, there are still certain areas without cellular wireless network coverage, for example where the deployment of cells is hazardous, difficult, costly or a combination of these. This may particularly occur in rural areas and developing countries.

Conventional cellular networks have been terrestrial (that is, with access nodes located on the Earth's surface). Non-terrestrial cellular networks have been proposed more recently, for example using an aerial platform or a High Altitude Platform (HAP) or satellite to provide cells. This allows coverage on the ground as it would be by a typical (terrestrial) Mobile Network Operator (MNO) site, allowing access by the same user or mobile terminals supporting this RAN in the terrestrial networks, in particular using 4G or 5G. In this context, a satellite could be considered a type of HAP and, for the purposes of this disclosure, the term HAP could include any type of aerial and/or radio platform, typically operating above 20km in altitude and possibly at a specified, nominal, fixed point relative to the Earth. A RAN provided by an aerial platform, HAP or satellite infrastructure involves complexities.

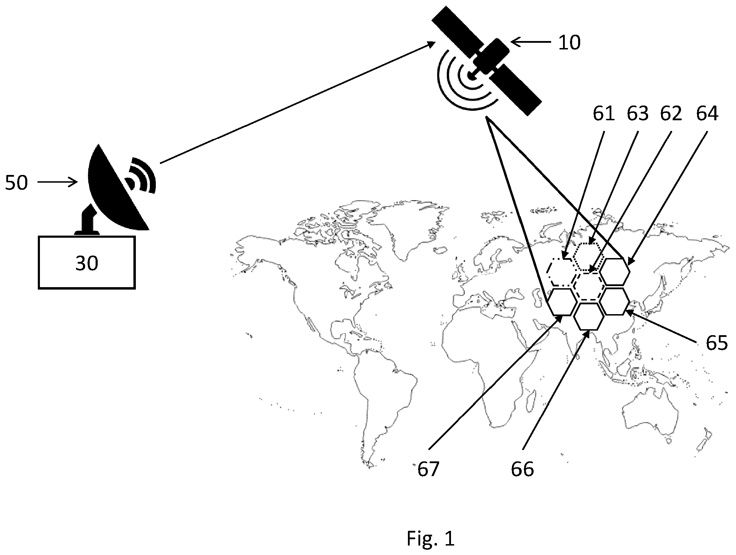

Referring first to Figure 1, there is shown a schematic architecture for an exemplary non-terrestrial cellular RAN, in this case provided through a satellite 10. The satellite 10 acts as a repeater between a baseband system 30 and the end users (for example, any SIM-based devices including mobile terminals, not shown). The baseband system 30 generates radio signals for transmission by the satellite 10 and also processes baseband signals received by the satellite 10. Thus, the baseband system 30 provides lower level base station functions (and may be virtualized or non-virtualized) and transmits one or more intermediate signals to the satellite 10. Each intermediate signal represents a baseband carrier signal for a respective cell, each carrier signal having a respective bandwidth. These are provided to a satellite gateway antenna unit 50, which acts as a mixer, multiplexer and ground station radio. The transmission frequency between the gateway antenna unit 50 and the satellite 10 is typically in the Ku-band or Q-band. The communication between the baseband system 30 and the satellite 10 is thereby made through the antenna 50. The intermediate signals (which for both Long Term Evolution, LTE signals, also termed 4G, and 5G signals would be Orthogonal Frequency Division Multiplexed, OFDM, signals) are advantageously transmitted to the satellite 10 multiplexed in frequency. Each intermediate signal may thus define a respective carrier signal.

The satellite 10 transmits the radio signals using individual, respective beams. A first carrier may be transmitted using a first beam to provide a first coverage area 61 (the upper left area shown), a second carrier may be transmitted using a second beam to provide a second coverage area 62 (the central area shown), a third carrier may be transmitted using a third beam to provide a third coverage area 63 (the top area shown), a fourth carrier may be transmitted using a fourth beam to provide a fourth coverage area 64 (the upper right area shown), a fifth carrier may be transmitted using a fifth beam to provide a fifth coverage area 65 (the lower right area shown), a sixth carrier may be transmitted using a sixth beam to provide a sixth coverage area 66 (the lower central area shown) and a seventh carrier may be transmitted using a seventh beam to provide a seventh coverage area 67 (the lower left area). Communication between the satellite 10 and the end users is in radio frequency bands standardised by 3GPP. Each downlink carrier signal is transmitted within a respective allocated frequency channel. Uplink from the user terminals to the satellite 10 is on a separate frequency band, typical on an allocated frequency channel that is paired with the downlink allocated channel.

The satellite 10 is thereby capable of managing a large number of wireless network cells and they can be communicated (that is, transmitted and/or received) over specific areas through directive beams. However, the satellite 10 is limited in both power and bandwidth. The bandwidth limitation especially applies for the link between the satellite 10 and the antenna unit 50. The baseband dimensioning is directly linked to the number of cells to be processed. As a result, the total bandwidth available for transmission (and/or reception) by the satellite 10 in providing the RAN is limited. The same issues may apply whatever form of aerial platform, HAP or satellite is used. Different forms of non-terrestrial cellular RAN provision may also be considered, with similar issues also applying.

When a user terminal accesses the cellular network using a non-terrestrial RAN, it may be treated as any other user terminal accessing a cellular network, depending on whether the user terminal is a subscriber or not. It is envisaged that many user terminals accessing the non-terrestrial RAN will not have a subscription to the cellular network of the non-terrestrial RAN. Improving the provision of service to such user terminals is desirable.

US-2022/0369266 A1 concerns a user equipment (UE) being configured to receive broadcast information from a public land mobile network (PLMN) including at least a PLMN identifier (ID), attempt a registration with the PLMN by sending a registration request to the PLMN, wherein the UE attempts the registration via a base station operated by the PLMN deployed in a non-terrestrial network (NTN) arrangement including a non-terrestrial component configured to provide services to the UE via a service link, receive a message including a cause code indicating the PLMN is not allowed to operate at a current UE location and further including a set of attributes indicating further conditions wherein the registration with the PLMN is not allowed and avoid further registration attempts with the PLMN when the further conditions are met.

### Summary of the Disclosure

Against this background, the present disclosure provides a method for provisioning service to a user terminal registering on a cellular network via a non-terrestrial Radio Access Network (RAN) according to claim 1. Also provided is a computer program as defined by claim 13 and a network entity configured to operate according to the method, in line with claim 15. Preferred and/or optional features are defined in dependent claims.

The disclosure concerns a user terminal registering on a cellular network via a non-terrestrial Radio Access Network (RAN). Some user terminals will have rights for service (for example, to receive one or more of: voice calls; text messages (Short Messaging Service or SMS); and packet-switched data, including Internet services) via the non-terrestrial RAN. However, some user terminals will not have such rights. User terminals without rights for service can be identified, in particular after being admitted to the network (that is, after completion of normal registration procedures, for instance attachment and/or registration procedures, tracking area updates, handover or Evolved Packet-switched System, EPS, bearer activation). The identified user terminal may not be provided with any service upon admission to the network via the non-terrestrial RAN. The identified user terminal can rather have its service provision restricted to a provisioning platform. Such an approach may be implemented by hardware and/or software (computer program), particularly at a network entity.

This will allow the user terminal to arrange service via the non-terrestrial RAN directly with the non-terrestrial RAN. This contrasts significantly with existing cellular network access provisioning, in which a user terminal is only admitted to the network if it has rights for service. Otherwise, the user terminal is rejected.

The identification of the user terminal as lacking rights of service can be performed in response to one or more of: an attach or registration procedure of the user terminal with the non-terrestrial RAN; a Tracking Area Update (TAU) by the user terminal with the non-terrestrial RAN; EPS bearer activation; and a handover procedure to the non-terrestrial RAN from a terrestrial RAN.

In some implementations, the non-terrestrial RAN uses a Public Land Mobile Network (PLMN) identifier shared with a terrestrial RAN. Alternatively, the non-terrestrial RAN may use a distinct PLMN identifier.

The rights for service may depend on the geographical location of the user terminal. In some embodiments, a location indication may be received from the user terminal (at the non-terrestrial RAN). Then, either access for the user terminal is redirected to: the core network of the cellular network corresponding with the location of the user terminal (as received) that may restrict the service provision for the user terminal; or a core network not corresponding with the location of the user terminal, which may then reject the user directly as being outside a service (coverage) area of the non-terrestrial RAN.

The identification of the user terminal as lacking rights of service and/or the restriction on service provision to the user terminal may be performed by a Packet Data Network Gateway (PGW) of the cellular network.

In embodiments, the identification of the user terminal as lacking rights of service may be based on one or both of: a Radio Access Technology (RAT) being used by the user terminal; and a geographical location of the user terminal. For instance, a user terminal may be provisioned with rights for service in some locations but not others and/or with some RATs but not others. Depending on the location and/or RAT used by the user terminal to access the non-terrestrial RAN, the user terminal may have some rights for service or not.

The restriction of the user terminal service provision may be achieved by applying Domain Name System (DNS) blocking.

Beneficially, the user terminal may be additionally directed to the provisioning platform (and not just restricted to the provisioning platform) in response to the identification. This may make it more straightforward for the user terminal to interact with the provisioning platform.

The user terminal may interact with the provisioning platform. In response, the service provision for the user terminal may be adjusted. For example, adjustment of the service provision may comprise the provisioning platform communicating with a global API platform. Then, the global API platform may communicate with a core network associated with the user terminal, for instance a Managed Service Provider (MSP) and/or a network entity in the core network, to adjust the service provision. The core network associated with the user terminal may be determined based on a Home PLMN of the user terminal.

### Brief Description of the Drawings

The approach of the disclosure may be put into practice in various ways, one of which will now be described by way of example only and with reference to the accompanying drawings in which:
Figure 1 shows a schematic architecture for an exemplary non-terrestrial cellular RAN; and
Figure 2 schematically shows a procedure and interfaces for service provision when a user terminal accesses a cellular network via a non-terrestrial cellular RAN.

Where a drawing indicates a feature also shown in another drawing, identical reference numerals have been used.

### Detailed Description of Preferred Embodiments

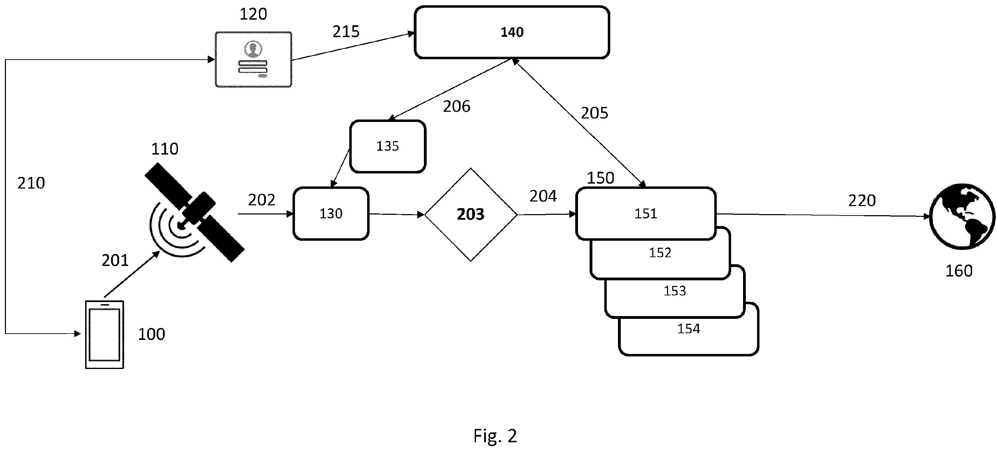

Referring to Figure 2, there is schematically shown a procedure and interfaces for service provision when a user terminal accesses a cellular network via a non-terrestrial cellular RAN. Specifically shown are: a user terminal 100; a non-terrestrial cellular RAN access point (depicted as a satellite) 110; a provisioning platform (server) 120; a Packet Data Network Gateway (PGW) 130; a Policy Control and Charging Rules Function (PCRF) 135; a provisioning Application Programming Interface (API) 140; Managed Service Provider (MSP) or SecureNet interfaces (termed MSP herein) 150; and an Internet interface 160. It can be seen that there are multiple MSPs 150, for example: a MSP for Spain 151; a MSP for the UK 152; a MSP for Italy 153; and a MSP for Germany 154.

The user terminal 100 completes an access procedure 201 with the non-terrestrial access point 110. In this disclosure, the term user terminal is used to describe the User Equipment (UE) and/or the subscriber identity module (for example, SIM) depending on the context. The nature of the access procedure 201 depends on the implementation of the non-terrestrial RAN. In particular, the non-terrestrial access point 110 can be configured with a different PLMN-id than the terrestrial network (a distinct PLMN-id). In this context the terrestrial network would typically be one having overlapping and/or adjacent coverage to the coverage of the non-terrestrial RAN.

Alternatively, the non-terrestrial access point 110 can be configured with the same PLMN-id as the terrestrial network (shared PLMN-id) but with a different Tracking Area Code (TAC) under the same Core Network (which could be a 4G Evolved Packet Core, EPC or a 5G Core, 5GC). The Core Network may use the RAT-type of "satellite" as defined in Release 17 3GPP specifications, to know that the user terminal 100 is accessing via the non-terrestrial RAN.

If the non-terrestrial access point 110 uses a distinct PLMN-id, the user terminal completes an attachment or registration procedure as part of the access procedure 201 followed by Evolved Packet-switched System (EPS) bearer activation. Any user terminal with access to the Home PLMN would be accepted by this procedure. If the non-terrestrial access point 110 uses a shared PLMN-id and different TAC, then the user terminal 100 can do a Tracking Area Update (TAU) if it loses the Terrestrial Network, or an attachment or registration procedure if the user terminal has just been activated (switched on). In both cases, the network accepts the TAU, attachment or registration procedure and EPS bearer activation as usual. The possibility of handover from the terrestrial network to the non-terrestrial network can also be considered as an option for the access procedure 201, but in this case, Internet data service may be lost although it may be possible to maintain a Voice over LTE (VoLTE) ongoing call.

An optional part of the access procedure 201 may include requesting and/or obtaining location information from the user terminal 100 at the non-terrestrial access point 110. The location information may be sent within signalling, as part of standardised control channel messages or as an additional message. This location information can then be used determine the location from which the user terminal 100 is accessing the non-terrestrial RAN. This may particularly allow appropriate routing from the non-terrestrial access point 110 to a Core Network associated with the country in which the user terminal 100 is located and/or as a validation on the geographical location of the user terminal 100.

The non-terrestrial access point 110 then requests 202 to the PGW 130 that the user terminal 100 be provided access. The PGW 130 recognises that the user terminal 100 is accessing the network via the non-terrestrial (satellite) RAN. On this basis, the PGW 130 initially does not provide any service by default, until it has been established whether the user terminal 100 has eligibility to receive service via the non-terrestrial RAN. As part of this process, a check 203 is made with MSP 150 whether the user terminal 100 has an active subscription for the non-terrestrial RAN. Such a subscription may be specific to the Radio Access Technology (RAT) being used and/or the geographical location of the user terminal 100. If the user terminal 100 has an active satellite subscription (for the specific RAT and/or location), full access 220 to the Internet is granted via interface 160.

If the user terminal 100 does not have an active subscription for the non-terrestrial RAN, the MSP 150 instructs 205 the provisioning API 140, which causes a service constraint 206, in this case a restriction, to be placed on the user terminal 100 via the PCRF 135 and PGW 130. The identified user terminal 100 is therefore restricted only to the provisioning platform 120.

This restriction may be effected using Domain Name Server (DNS) blocking. External DNS may also be blocked.

Advantageously, the user terminal 100 is also directed (for example by a SMS message, control signalling, a browser redirection or similar) to the provisioning platform 120, which includes a registration portal. This allows the user of the user terminal 100 to register and thereby obtain rights for service via the non-terrestrial RAN. The rights can be complete or they can be limited, for example based on traffic type (browsing, educational, streaming, voice, etc.) and/or bandwidth requirement.

Once those rights have been obtained, the provisioning platform 120 triggers a call to the provisioning API 140. The provisioning API 140 is a global platform and can work with any Core Network, even with operators other than the operator of the non-terrestrial RAN. The provisioning API 140 detects the home country of the user terminal 100 and activates a subscription in the MSP 150, specifically in the MSP of the country corresponding with the home network of the user terminal 100. The provisioning API 140 then communicates a new service constraint 206 to PCRF 135 to apply the previously defined policies. Assuming the rights allow, the user terminal 100 is thereby granted full service access 220 to the Internet via interface 160. The rights may be temporary or permanent and depending on their duration and any traffic type selected in the rights, the next time the user terminal 100 seeks to use the non-terrestrial RAN, the PGW 130 may not block its access, but instead let it seamlessly receive service access 220 via the MSP 150 and interface 160.

In general terms, there may thus be considered a method (and a correspondingly configured network entity of a cellular network) for provisioning service to a user terminal registering on a cellular network via a non-terrestrial RAN. The user terminal is identified as not having rights for service via the non-terrestrial RAN (in particular, after the user terminal is attached, registered or otherwise connected to the network via the non-terrestrial RAN). In response to this identification (and before the user is provided with any service via the non-terrestrial RAN), service provision is restricted for the user terminal to a provisioning platform.

The step of identifying is beneficially performed in response to one or more of: an attach or registration procedure of the user terminal with the non-terrestrial RAN; a Tracking Area Update (TAU) by the user terminal with the non-terrestrial RAN; and a handover procedure to the non-terrestrial RAN from a terrestrial RAN. One or more of these may involve, include or cause EPS bearer activation.

In some embodiments, the non-terrestrial RAN has a same PLMN identifier (PLMN-id) as a terrestrial RAN. In this case, a TAU or an attachment or registration procedure may be used to begin access through the non-terrestrial RAN. Where the non-terrestrial RAN has a different PLMN identifier than the terrestrial RAN (or any terrestrial RAN), an attachment or registration procedure is normally used to begin access through the non-terrestrial RAN.

Optionally, a location indication may be received (at the non-terrestrial RAN) from the user terminal. Then, the restriction of service provision may be performed using a core network of the cellular network corresponding with the received location indication.

The step of identifying and/or the step of restricting may be performed by a PGW of the cellular network.

The step of identifying is optionally based on one or both of: a Radio Access Technology (RAT) being used by the user terminal; and a geographical location of the user terminal. In other words, the rights for service to the user terminal may be specific to one or both of these parameters.

The step of restricting advantageously comprises applying DNS blocking.

Preferably, the user terminal is also directed to the provisioning platform in response to the identification. For example, this may be by SMS message, browser redirect or control signalling.

Advantageously, the method further comprises adjusting the service provision for the user terminal in response to an interaction between the user terminal and the provisioning platform. This may involve one or more of: a global (or provisioning) API platform; PGW; PCRF; MSP (or SecureNet). For example, adjusting of the service provision may comprise a communication from the provisioning platform to the global API platform. Then, the global API platform may communicate with a core network associated with the user terminal to adjust the service provision. Typically, the core network associated with the user terminal is determined based on a Home PLMN of the user terminal. The global API platform may communicate with a MSP (selected based on the country in which the user terminal is located or where the Home PLMN of the user terminal is located) and/or a network entity in the core network to adjust the service provision.

The method may be implemented as a network entity or station of a cellular network, the network entity or station being configured to operate in accordance with the method. Examples of a network entity in this context may include a cell, an entity configured for operating or controlling the cell, a provisioning platform, a global/provisioning API platform. Other examples may include a network node of a cellular network (for example, a eNB or gNB). For example, the network entity may include a processor and at least one communication interface, particularly comprising one or both of a transmitter and receiver. A user terminal may likewise include a processor and at least one communication interface, particularly comprising one or both of a transmitter and receiver. A controller for a network entity may also be considered.

Any of the methods described herein may be implemented as a computer program. The computer program may be configured to control a network node or entity to perform any method according to the disclosure.

A satellite-based non-terrestrial cellular RAN has been considered herein. Preferred embodiments may be concerned with a non-terrestrial cellular RAN provided using a Low Earth Orbit (LEO) satellite. A LEO satellite may deliver a network round-trip-time similar to that of terrestrial networks, advantageously improving the inter-operability of satellite and terrestrial RANs and a similar data connection quality to be met across both systems. However, the non-terrestrial cellular RAN may alternatively be based on a Medium Earth Orbit (MEO) satellite, Geostationary Earth Orbit (GEO) satellite, an aerial platform, drones, High Altitude Platform (HAP) or very high altitude platforms.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment (or aspect) or with reference to multiple embodiments (or aspects) are also provided, even if that combination has not been explicitly detailed herein.

## Claims

1. A method for provisioning service to a user terminal (100) registering on a cellular network via a non-terrestrial Radio Access Network, RAN, the method comprising:
identifying that the user terminal does not have rights for service via the non-terrestrial RAN; and
**characterised by** restricting service provision for the user terminal to a provisioning server (120) where the user terminal can register and thereby obtain rights for service via the non-terrestrial RAN, in response to the identification.

2. The method of claim 1, wherein the step of identifying is performed in response to one or more of: an attach or registration procedure of the user terminal (100) with the non-terrestrial RAN; a Tracking Area Update, TAU, by the user terminal with the non-terrestrial RAN; and a handover procedure to the non-terrestrial RAN from a terrestrial RAN.

3. The method of claim 1 or claim 2, wherein the non-terrestrial RAN has a same Public Land Mobile Network, PLMN, identifier as a terrestrial RAN.

4. The method of any preceding claim, further comprising:
receiving a location indication from the user terminal (100); and
wherein the step of restricting is performed using a core network of the cellular network corresponding with the received location indication.

5. The method of any preceding claim, wherein the step of identifying and/or the step of restricting is performed by a Packet Data Network Gateway, PGW (130) of the cellular network.

6. The method of any preceding claim, wherein the step of identifying is based on one or both of: a Radio Access Technology, RAT, being used by the user terminal; and a geographical location of the user terminal.

7. The method of any preceding claim, wherein the step of restricting comprises applying Domain Name System, DNS, blocking.

8. The method of any preceding claim, further comprising:
directing the user terminal (100) to the provisioning platform (130) in response to the identification.

9. The method of any preceding claim, further comprising:
adjusting the service provision for the user terminal (100) in response to an interaction between the user terminal and the provisioning server (130).

10. The method of claim 9, wherein the adjusting of the service provision comprises a communication from the provisioning server (130) to a global API (140), the global API communicating with a core network associated with the user terminal to adjust the service provision.

11. The method of claim 10, wherein the core network associated with the user terminal (100) is determined based on a Home Public Land Mobile Network, PLMN, of the user terminal.

12. The method of any one of claims 9 to 11, wherein the global API (140)communicates with a Managed Service Provider, MSP (150) and/or a network entity in the core network to adjust the service provision.

13. A computer program comprising instructions which, when the program is executed by a computer, cause the computer to perform the method of any preceding claim.

14. A network entity of a cellular network configured to perform the method of any one of claims 1 to 12.

## Patentansprüche

1. Verfahren zum Bereitstellen eines Dienstes für ein Benutzerendgerät (100), das über ein nicht terrestrisches Funkzugangsnetz (Radio Access Network, RAN) auf einem zellularen Netz registriert ist, wobei das Verfahren umfasst:
Identifizieren, dass das Benutzerendgerät keine Berechtigungen für den Dienst über das nicht terrestrische RAN hat; und
**dadurch gekennzeichnet, dass** die Dienstbereitstellung für das Benutzerendgerät auf einen Bereitstellungsserver (120) eingeschränkt wird, wobei sich das Benutzerendgerät registrieren und dadurch Berechtigungen für den Dienst über das nicht terrestrische RAN erhalten kann, infolge der Identifizierung.

2. Verfahren nach Anspruch 1, wobei der Schritt des Identifizierens durchgeführt wird infolge: eines Verbindungs- oder Registrierungsverfahrens des Benutzerendgeräts (100) bei dem nicht terrestrischen RAN; einer Verfolgungsbereichsaktualisierung (Tracking Area Update, TAU) durch das Benutzerendgerät in dem nicht terrestrischen RAN; und/oder eines Übergabeverfahrens an das nicht terrestrische RAN von einem terrestrischen RAN.

3. Verfahren nach Anspruch 1 oder Anspruch 2, wobei das nicht terrestrische RAN dieselbe PLMN-Kennung eines öffentlichen terrestrisches Mobilfunknetzes (Public Land Mobile Network, PLMN) wie ein terrestrisches RAN aufweist.

4. Verfahren nach einem vorstehenden Anspruch, ferner umfassend:
Empfangen einer Standortangabe von dem Benutzerendgerät (100); und
wobei der Schritt des Einschränkens mittels eines Kernnetzes des zellularen Netzes durchgeführt wird, das der empfangenen Standortangabe entspricht.

5. Verfahren nach einem vorstehenden Anspruch, wobei der Schritt des Identifizierens und/oder der Schritt des Einschränkens durch ein Paketdatennetzgateway (Packet Data Network Gateway, PGW) (130) des zellularen Netzes durchgeführt wird.

6. Verfahren nach einem vorstehenden Anspruch, wobei der Schritt des Identifizierens basiert auf: einer durch das Benutzerendgerät verwendeten Funkzugangstechnologie (Radio Access Technology, RAT); und/oder einem geografischen Standort des Benutzerendgeräts.

7. Verfahren nach einem vorstehenden Anspruch, wobei der Schritt des Einschränkens das Anwenden von Domänennamenssystemblockierung (Domain Name System, DNS-Blockierung) umfasst.

8. Verfahren nach einem vorstehenden Anspruch, ferner umfassend:
Leiten des Benutzerendgeräts (100) an die Bereitstellungsplattform (130) infolge der Identifizierung.

9. Verfahren nach einem vorstehenden Anspruch, ferner umfassend:
Anpassen der Dienstbereitstellung für das Benutzerendgerät (100) infolge einer Interaktion zwischen dem Benutzerendgerät und dem Bereitstellungsserver (130).

10. Verfahren nach Anspruch 9, wobei das Anpassen der Dienstbereitstellung eine Kommunikation von dem Bereitstellungsserver (130) an eine globale API (140) umfasst, wobei die globale API mit einem dem Benutzerendgerät zugeordneten Kernnetz kommuniziert, um die Dienstbereitstellung anzupassen.

11. Verfahren nach Anspruch 10, wobei das dem Benutzerendgerät (100) zugeordnete Kernnetz auf Basis eines öffentlichen terrestrischen Heimmobilfunknetzes (Home Public Land Mobile Network, PLMN) des Benutzerendgeräts bestimmt wird.

12. Verfahren nach einem der Ansprüche 9 bis 11, wobei die globale API (140) mit einem Anbieter für verwaltete Dienste (Managed Service Provider, MSP) (150) und/oder einer Netzeinheit in dem Kernnetz kommuniziert, um die Dienstbereitstellung anzupassen.

13. Computerprogramm umfassend Anweisungen, die bei Ausführung des Programms durch einen Computer veranlassen, dass der Computer das Verfahren nach einem der vorstehenden Ansprüche ausführt.

14. Netzeinheit eines zellularen Netzes, konfiguriert zum Durchführen des Verfahrens nach einem der Ansprüche 1 bis 12.

## Revendications

1. Procédé de provisionnement de service à un terminal utilisateur (100) enregistré sur un réseau cellulaire via un réseau d'accès radio, RAN, non terrestre, le procédé comprenant :
l'identification du fait que le terminal utilisateur n'a pas de droits au service via le RAN non terrestre ; et
**caractérisé par** la restriction de fourniture de service pour le terminal utilisateur à un serveur de provisionnement (120) où le terminal utilisateur peut s'enregistrer et ainsi obtenir des droits au service via le RAN non terrestre, en réponse à l'identification.

2. Procédé selon la revendication 1, dans lequel l'étape d'identification est réalisée en réponse à une ou plusieurs parmi : une procédure de rattachement ou d'enregistrement du terminal utilisateur (100) auprès du RAN non terrestre ; une actualisation de zone de suivi, TAU, par le terminal utilisateur auprès du RAN non terrestre ; et une procédure de transfert au RAN non terrestre à partir d'un RAN terrestre.

3. Procédé selon la revendication 1 ou la revendication 2, dans lequel le RAN non terrestre a le même identifiant de réseau mobile terrestre public, PLMN, que le RAN terrestre.

4. Procédé selon l'une quelconque des revendications précédentes, comprenant en outre :
la réception d'une indication d'emplacement à partir du terminal utilisateur (100) ; et
dans lequel l'étape de restriction est réalisée à l'aide d'un réseau central du réseau cellulaire correspondant à l'indication d'emplacement reçue.

5. Procédé selon l'une quelconque des revendications précédentes, dans lequel l'étape d'identification et/ou l'étape de restriction sont réalisées par une passerelle de réseau de données par paquets, PGW (130) du réseau cellulaire.

6. Procédé selon l'une quelconque des revendications précédentes, dans lequel l'étape d'identification est basée sur : une technologie d'accès radio, RAT, utilisée par le terminal utilisateur ; et/ou un emplacement géographique du terminal utilisateur.

7. Procédé selon l'une quelconque des revendications précédentes, dans lequel l'étape de restriction comprend l'application d'un blocage de système de noms de domaine, DNS.

8. Procédé selon l'une quelconque des revendications précédentes, comprenant en outre :
la redirection du terminal utilisateur (100) vers la plateforme de provisionnement (130) en réponse à l'identification.

9. Procédé selon l'une quelconque des revendications précédentes, comprenant en outre :
le réglage de la fourniture de service pour le terminal utilisateur (100) en réponse à une interaction entre le terminal utilisateur et le serveur de provisionnement (130).

10. Procédé selon la revendication 9, dans lequel le réglage de la fourniture de service comprend une communication du serveur de provisionnement (130) à une API globale (140), l'API globale communiquant avec un réseau central associé au terminal utilisateur pour régler la fourniture de service.

11. Procédé selon la revendication 10, dans lequel le réseau central associé au terminal utilisateur (100) est déterminé sur la base d'un réseau mobile terrestre public, PLMN, de rattachement du terminal utilisateur.

12. Procédé selon l'une quelconque des revendications 9 à 11, dans lequel l'API globale (140) communique avec un fournisseur de service géré, MSP (150) et/ou une entité de réseau dans le réseau central pour régler la fourniture de service.

13. Programme informatique comprenant des instructions qui, lorsque le programme est exécuté par un ordinateur, amènent l'ordinateur à réaliser le procédé de l'une quelconque des revendications précédentes.

14. Entité de réseau d'un réseau cellulaire configurée pour réaliser le procédé de l'une quelconque des revendications 1 à 12.
